Europäisches Patentamt

European Patent Office

Office européen des brevets

(19)

(11) Veröffentlichungsnummer : **0 142 005**
**B1**

(12) # EUROPÄISCHE PATENTSCHRIFT

(45) Veröffentlichungstag der Patentschrift :
25.05.88

(51) Int. Cl.⁴ : **B 01 D 53/22, C 01 B 3/50**

(21) Anmeldenummer : 84111876.3

(22) Anmeldetag : 04.10.84

(54) **Verfahren zum Abtrennen einer Komponente aus einem Gasgemisch.**

(30) Priorität : 15.10.83 DE 3337572

(43) Veröffentlichungstag der Anmeldung :
22.05.85 Patentblatt 85/21

(45) Bekanntmachung des Hinweises auf die Patenterteilung : 25.05.88 Patentblatt 88/21

(84) Benannte Vertragsstaaten :
AT BE DE FR GB IT NL

(56) Entgegenhaltungen :
FR-A- 1 409 739
US-A- 1 496 757
US-A- 3 735 558

(73) Patentinhaber : **Linde Aktiengesellschaft**
**Abraham-Lincoln-Strasse 21**
**D-6200 Wiesbaden (DE)**

(72) Erfinder : **Burr, Peter Stewart, Dr.-Ing.**
**Kandinskystrasse 24**
**D-8000 München 71 (DE)**

(74) Vertreter : **Schaefer, Gerhard, Dr.**
**Linde Aktiengesellschaft Zentrale Patentabteilung**
**D-8023 Höllriegelskreuth (DE)**

Jouve, 18, rue St-Denis, 75001 Paris, France

EP 0 142 005 B1

## Beschreibung

Die Erfindung betrifft ein Verfahren zum Abtrennen einer leichter diffundierenden Komponente aus einem diese neben mindestens einer schwerer diffundierenden Komponente enthaltenden Gasgemisch durch Diffusion mit Hilfe von semipermeablen Membranen.

Semipermeable Membranen werden zur Zerlegung von Gasgemischen verwendet, die Komponenten mit unterschiedlicher Diffusionsgeschwindigkeit aufweisen. Ein Gasgemisch, das unter erhöhtem Druck vorliegt, wird auf der einen Seite der Membranen zugeführt. Aufgrund von Partialdruckunterschieden diffundiert eine Komponente des Gasgemisches bevorzugt durch die Membranen, wobei sie einen Druckverlust erleidet. Die schwerer diffundierenden Komponenten bleiben auf der Nichtdurchgangsseite der Membranen und werden getrennt von der abgetrennten Komponente aus der Diffusionseinrichtung abgeführt.

Um eine möglichst hohe Ausbeute an der abgetrennten Komponente zu erhalten, werden eine große Membranfläche sowie ein hoher Druckgradient zwischen der Nichtdurchgangsseite und der Durchgangsseite der Membranen benötigt. Diese Anforderungen erhöhen jedoch die Installations- und Betriebskosten der Anlage.

Es sind bereits Verfahren bekanntgeworden (FR-A 1 409 739, US-A 1, 496, 757), bei denen ein Gasgemisch in einer Diffusionseinrichtung zerlegt wird, wobei auf der Durchgangsseite der Diffusionseinrichtung ein Spülgas zugeführt wird.

Die für die Zuführung des Spülgases erforderlichen konstruktiven Veränderungen der Diffusionseinrichtung stellen allerdings einen unerwünschten Mehraufwand dar.

Der vorliegenden Erfindung liegt daher die Aufgabe zugrunde, ein Verfahren der eingangs genannten Art zu entwickeln, das sich durch eine hohe Ausbeute an der abgetrennten Komponenten sowie durch geringe Installations- und Betriebskosten auszeichnet.

Diese Aufgabe wird erfindungsgemäß dadurch gelöst, daß auf der Nichtdurchgangsseite der Membranen dem Gasgemisch ein Gas mit einer höheren Diffusionsgeschwindigkeit als die der leichter diffundierenden Komponente des Gasgemisches zugeführt wird.

Die Zumischung eines Gases vor der Diffusion scheint auf den ersten Blick nachteilig, da dadurch der Partialdruck der diffundierenden Komponente auf der Nichtdurchgangsseite der Membranen abgesetzt wird. Da aber das zugemischte Gas eine wesentlich höhere Diffusionsgeschwindigkeit als die leichter diffundierende Komponente des Gasgemisches besitzt, gelangt das zugemischte Gas unverzüglich auf die Durchgangsseite der Membranen, wo es das diffundierende Gas verdünnt. Damit sinkt der Partialdruck der diffundierenden Komponente auf der Durchgangsseite der Membranen. Dies bedeutet, daß die Ausbeute an der leichter diffundierenden Komponente erhöht wird, da bei niedrigem Partialdruck eine höhere Diffusionsrate erreicht wird. Umgekehrt läßt sich bei gleichbleibender Ausbeute die Membran-Austauschfläche deutlich verringern. Der zur Durchführung des Verfahrens erforderliche konstruktive Aufbau ist gering. Die erfindungsgemäße Verfahrensführung ist wirtschaftlich und ermöglicht eine hohe Ausbeute.

Es erweist sich als zweckmäßig, wenn das vor der Diffusion beigemischte Gas Wasserdampf ist.

Neben dem Verdünnungseffekt bietet der Wasserdampf den Vorteil, daß er das Gasgemisch erhitzt und somit ein Auskondensieren von nicht diffundierenden Komponenten in der Diffusionseinrichtung verhindert. Insbesondere eignet sich die Wasserdampfzumischung bei einem Gasgemisch mit Kohlendioxid und Methan als wesentlichen Bestandteilen.

Bei einer bevorzugten Weiterbildung des Erfindungsgemäßen Verfahrens erfolgt die Abtrennung der leichter diffundierenden Komponente durch mindestens zweistufige Diffusion, wobei der nicht diffundierende Anteil des Gasgemisches aus der ersten Diffusionsstufe einer zweiten Diffusionsstufe zugeführt wird.

Bei einer bevorzugten Ausgestaltung des erfindungsgemäßen Verfahrens ist das Gasgemisch ein Purge-Gas einer Ammoniaksynthese.

Das Purge-Gas enthält als Hauptbestandteile Stickstoff und Wasserstoff, sowie Argon und Methan. Aufgrund seiner größeren Diffusionsgeschwindigkeit gegenüber den anderen Komponenten wird der Wasserstoff bei der Diffusion abgetrennt.

Bei einer anderen bevorzugten Ausführungsform des erfindungsgemäßen Verfahrens enthält das Gasgemisch Methan und Kohlendioxid als wesentliche Bestandteile. Ein derartiges Gagemisch tritt beispielsweise bei der tertiären Ölgewinnung auf.

Die Erfindung sowie weitere Einzelheiten der Erfindung werden anhand eines schematisch dargestellten Ausführungsbeispiels näher erläutert.

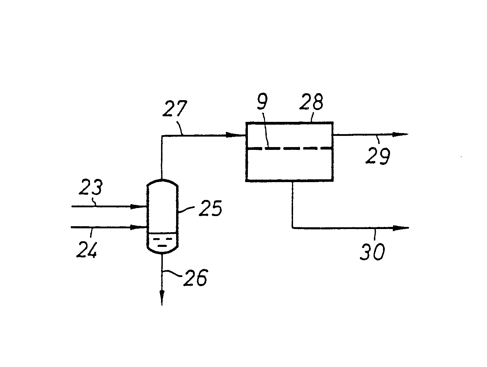

Hierbei zeigt die Figur ein Verfahren gemäß der Erfindung zur Rückgewinnung von Kohlendioxid aus einem Gasgemisch 23, das etwa 80 % $CO_2$, 20 % $CH_4$ sowie geringe Mengen an $C_{2+}$-Kohlenwasserstoffen enthält. Der Druck des Gasgemisches beträgt ca. $50 \times 10^5$ Pa (50 bar), die Temperatur ca. 300 K. Ein derartiges Gasgemisch fällt z. B. bei der tertiären Ölgewinnung an. Das zur Verdünnung des diffundierenden Gases eingesetzte Gas wird nicht unmittelbar auf der Durchgangsseite der Diffusionseinrichtung 28 zugeführt, sondern es wird dem zu zerlegenden Gasgemisch bereits auf der Nichtdurchgangsseite zugemischt, von wo aus es allerdings aufgrund seiner im Vergleich zu den Komponenten des Gasgemisches wesentlich höheren Diffusionsgeschwindigkeit sehr rasch auf die Durchgangsseite gelangt. Im vorliegenden Fall wird dem Gasgemisch 23 Wasserdampf 24 (Druck ca. $50 \times 10^5$ Pa (50 bar), Temperatur ca. 536 K) zugemischt. Die Dampfmenge beträgt ca. 5 bis 25 %, vorzugsweise 10 bis 20 % der Menge des zu zerlegenden Gases. Die Vermischung erfolgt in einem Abscheider 25, in dem verflüssigte Bestandteile über eine Leitung 26 aus dem Gasgemisch abgetrennt werden. Das über den Kopf des Abscheiders 25 abziehende Gasgemisch 27 wird der Diffusionseinrichtung 28 zugeführt. Seine Temperatur beträgt ca. 371 K.

Da die Permeabilität des Wasserdampfes etwa 20 mal so groß wie die von Kohlendioxid und etwa 500 mal so groß wie die von Methan ist, wird der Wasserdampf bevorzugt durch die Membranen 9 diffundieren. Durch den auf der Durchgangsseite der Membranen befindlichen Wasserdampf wird der Partialdruck des durch die Membranen 9 diffundierenden Kohlendioxids abgesetzt, so daß eine hohe Ausbeute erzielt wird. Die nicht diffundierenden Anteile des Gasgemisches (im wesentlichen Methan) verlassen die Diffusionseinrichtung 28 auf der Nichtdurchgangsseite über Leitung 29, während das diffundierte Kohlendioxid/Wasserdampf-Gemisch über Leitung 30 entnommen wird.

Neben der Erhöhung der Ausbeute bewirkt der Wasserdampf, daß das Gasgemisch 27 angewärmt wird, so daß ein Auskondensieren der $C_{2+}$-Kohlenwasserstoffe unterbleibt.

Die folgende Tabelle zeigt die Ausbeute und Reinheit des Kohlendioxids in Abhängigkeit von der zugeführten Wasserdampfmenge (die Wasserdampfmenge ist in $Nm^3/h$ pro 100 $Nm^3/h$ Gasgemisch 23 angegeben).

### Tabelle

| Dampfmenge ($Nm^3/h$) | $CO_2$-Ausbeute | $CO_2$-Reinheit (wasserfrei) |
|---|---|---|
| 0 | 94,5 % | 94,0 % |
| 10 | 95,0 % | 94,1 % |
| 20 | 95,4 % | 94,2 % |

### Patentansprüche

1. Verfahren zum Abtrennen einer leichter diffundierenden Komponente aus einem diese neben mindestens einer schwerer diffundierenden Komponente enthaltenden Gasgemisch durch Diffusion mit Hilfe von semipermeablen Membranen, dadurch gekennzeichnet, daß auf der Nichtdurchgangsseite der Membranen (9) dem Gasgemisch ein Gas mit einer höheren Diffusionsgeschwindigkeit als die der leichter diffundierenden Komponente des Gasgemisches zugeführt wird.

2. Verfahren nach Anspruch 1, dadurch gekennzeichnet, daß das vor der Diffusion beigemischte Gas Wasserdampf ist.

3. Verfahren nach Anspruch 1 oder 2, dadurch gekennzeichnet, daß die Abtrennung der leichter diffundierenden Komponente durch mindestens zweistufige Diffusion erfolgt, wobei der nicht diffundierende Anteil des Gasgemisches aus der ersten Diffusionsstufe einer zweiten Diffusionsstufe zugeführt wird.

4. Verfahren nach einem der Ansprüche 1 bis 3, dadurch gekennzeichnet, daß das Gasgemisch ein Purge-Gas einer Ammoniaksynthese ist.

5. Verfahren nach einem der Ansprüche 1 bis 3, dadurch gekennzeichnet, daß das Gasgemisch Methan und Kohlendioxid als wesentliche Bestandteile enthält.

### Claims

1. Process for the separation of a more easily diffusing component from a gas mixture containing this together with at least one more difficultly diffusing component by diffusion with the aid of semipermeable membranes, characterised in that at the upstream side of the membranes (9), a gas is added to the gas mixture which has a higher diffusion speed than that of the easilly diffusing component of the gas mixture.

2. A process as claimed in Claim 1, characterised in that the gas admixed prior to the diffusion is water vapour.

3. A process as claimed in Claim 1 or Claim 2, characterised in that the separation of the easily diffusible component is effected through at least two-stage diffusion, the part of the gas mixture which does not diffuse from the first diffusion stage being fed to a second diffusion stage.

4. A process as claimed in one of Claims 1 to 3, characterised in that the gas mixture is a purge gas from an ammonia synthesis.

**0 142 005**

5. A process as claimed in one of Claims 1 to 3, characterised in that the gas mixture contains methane and carbon dioxide as essential constituents.

**Revendications**

1. Procédé de séparation d'un composant diffusant plus facilement à partir d'un mélange de gaz contenant ce composant mélangé à au moins un composant diffusant plus difficilement, par diffusion à l'aide de membranes semi-perméables, caractérisé en ce que, du côté non traversé de la membrane (9), on ajoute au mélange de gaz, un gaz présentant une vitesse de diffusion plus élevée que celle du composant diffusant plus facilement du mélange de gaz.

2. Procédé selon la revendication 1, caractérisé en ce que le gaz ajouté en mélange avec la diffusion est de la vapeur d'eau.

3. Procédé selon la revendication 1 ou 2, caractérisé en ce que la séparation du composant diffusant plus facilement se fait à travers au moins deux étages de diffusion, la portion du mélange de gaz qui ne diffuse pas étant amenée d'une première installation de diffusion à une deuxième installation de diffusion.

4. Procédé selon l'une quelconque des revendications 1 à 3, caractérisé en ce que le mélange de gaz est le gaz de purge d'une synthèse de l'ammoniac.

5. Procédé selon l'une quelconque des revendications 1 à 3, caractérisé en ce que le mélange de gaz contient comme constituant essentiel du méthane et du dioxyde de carbone.

4